(19)

Europäisches
Patentamt

European
Patent Office

Office européen
des brevets

(11)     EP 4 417 841 A1

## (12)     EUROPEAN PATENT APPLICATION

(43) Date of publication:
    **21.08.2024 Bulletin 2024/34**

(21) Application number: **24155943.4**

(22) Date of filing: **06.02.2024**

(51) International Patent Classification (IPC):
    **F16H 61/431** (2010.01)     **F16H 61/465** (2010.01)

(52) Cooperative Patent Classification (CPC):
    **F16H 61/431; F16H 61/465**

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **GE KH MA MD TN**

(30) Priority: **14.02.2023 IT 202300002460**

(71) Applicant: **Robert Bosch GmbH
    70442 Stuttgart (DE)**

(72) Inventors:
    • **Mueller, Matthias
      89129 Langenau (DE)**
    • **Herrmann, Ronny
      89129 Langenau (DE)**
    • **Dubb, Benjamin
      89075 Ulm (DE)**

(54)     **METHOD OF REGULATING A HYDROSTATIC TRACTION SYSTEM**

(57)     The present invention relates to a method for regulating a hydrostatic drive system, wherein the said hydrostatic drive system comprises a hydraulic pump (12), whose rotation is guaranteed by a drive motor, and at least one hydraulic motor connected in a closed loop to the said hydraulic pump (12), wherein the said hydraulic pump (12) features a regulation unit (4) for regulating displacement of the said hydraulic pump, wherein the said displacement can be regulated by adjusting an inclination angle ($\alpha_{pmp}$) of an inclined member (2), wherein the said hydrostatic drive system is configured to regulate the said inclined member (2) based on a control speed of the said drive motor, wherein the said drive motor is regulated based on a signal from an input unit in the said hydrostatic drive system, the said input unit being configured so as to be able to receive a command from a user of the said drive system, the said method being configured comprising the following steps:
a. Detecting a signal from the said user by means of the said input unit;
b. Detecting a desired speed of the said drive motor based on the said signal detected in step a., and detecting an actual speed of the said drive motor;
c. Calculating a value of the said drive motor control speed to use to regulate the hydraulic pump (12) on the basis of the said signal from the said user detected in the said step a., and likewise a value of the said desired speed and a value of the said actual speed;
d. Regulating the said hydraulic pump based on the said control speed calculated in the said step c.

EP 4 417 841 A1

Fig. 2

**Description**

TECHNICAL FIELD

The present invention relates to the field of a method for regulating the regulating system of a hydrostatic drive system, a computational unit adapted to perform the said method, an operating machine comprising the said computational unit, a program for a computer which induces a computational unit to perform this method and a readable storage medium on which the said program is stored.

BACKGROUND

In hydraulic drive transmissions, load-sensitive closed-loop swashplate axial piston pumps (also known as ET pumps) are usually used. One characteristic of the said pumps is that an increase in load tends to decrease the pump inclination angle. Consequently, for example, if the operating machine starts going uphill, the load the machine must bear will increase. This will therefore cause a decrease in the pump inclination angle. The advantage of these ET pumps is that the power and pressure controls are very simple.

The said pumps are generally connected to a drive motor which can be an internal combustion engine (such as, for example, a diesel engine) or an electric motor, which guarantees the rotation thereof. A user, by means of an input unit - such as a joystick, a lever, or an acceleration pedal - makes an adjustment to the number of revolutions performed by the drive motor. However, it is clear that the actual number of revolutions reached depends on the load to which the drive motor is subjected.

There are several ways to regulate the said hydrostatic drive systems. All the commonly known methods share the fact that they regulate the hydraulic pump on the basis of a speed. This speed is commonly called the control speed.

A first way of regulating this drive system is by adjusting the pump inclination angle based on the drive motor speed (wherein the control speed is therefore equal to the actual speed of the drive motor). This type of control is commonly known as EDA control. The great advantage of this type of control is that it is load-dependent and therefore, for example, during slowdown (drag) conditions, smooth deceleration can be obtained based on the load. Therefore, in EDA control, the user - by controlling the input unit - directly specifies a required torque and drive motor regulation is performed on the basis of the required torque and the actual speed of the drive motor. The disadvantage is that there is only indirect control in fine positioning, which is influenced by the delay between the input at the pedal and the motor speed and by the effects of the load. Therefore, in the event that one wishes to accelerate from a stationary condition, slightly varying the speed of the mobile machine, it can happen that the drive system does not deliver any speed and therefore the said machine is unable to perform as required by the user.

In response to this problem, a second way of regulating the drive system, commonly known as DAC, was developed in the past. This method allows the drive system to be regulated based on the drive motor speed required by the user (wherein the control speed is therefore equal to the desired drive motor speed). Therefore, in DAC control, the user - by controlling the input unit - directly specifies a required drive motor rotation value. Therefore, the said performance is not load-dependent, but it does compensate for the disadvantages of EDA control. However, the DAC system is not load-dependent.

A third way of regulating the drive system consists of regulating the pump according to the lowest of either the speed of the current drive motor and the speed required by the user thereof (wherein the control speed is therefore equal to the lowest of either the desired speed and actual speed of the drive motor). With this solution, commonly known as DRC, the drive control always adapts to the operating point of the drive motor and is load-dependent. In a deceleration condition, however, the said control does not depend on the speed of the drive motor, since the idle speed is zero when the pedal is released, and therefore the said control does not have the same advantages as EDA solution in the same condition. Furthermore, the DRC solution requires ramp-based control in drive and transient conditions. During fine positioning, the control is disturbed by the motor speed (if the motor speed is less than the desired speed in transient and load conditions).

The object therefore is to provide a method that allows these problems to be solved without requiring additional components or particularly complex control systems.

SUMMARY

The present invention concerns a method containing the characteristics listed in Claim 1.

An embodiment of the present invention provides a method for regulating a hydrostatic drive system, wherein the said hydrostatic drive system comprises a hydraulic pump (12), whose rotation is guaranteed by a drive motor, and at least one hydraulic motor connected in a closed loop to the said hydraulic pump (12), wherein the said hydraulic pump (12) features a regulation unit (4) for regulating displacement of the said hydraulic pump, wherein the said displacement can be regulated by adjusting an inclination angle ($\alpha_{pmp}$) of an inclined member (2), wherein the said hydrostatic drive system is configured to regulate the said inclined member (2) based on a control speed, wherein the said drive motor is regulated based on a signal from an input unit in the said hydrostatic drive system, the said input unit being configured so as to be able to receive a command from a user of the said drive system, the said method being configured comprising the following steps:

> a. Detecting a signal from the said user by means of the said input unit;
> b. Detecting a desired speed of the said drive motor based on the said signal detected in step a., and detecting an actual speed of the said drive motor;
> c. Calculating a value of the said control speed to use to regulate the hydraulic pump (12) on the basis of the said signal from the said user detected in the said step a., and likewise a value of the said desired speed and a value of the said actual speed;
> d. Regulating the said hydraulic pump based on the said control speed calculated in the said step c.

The said drive speed refers to a speed determined by the control unit as the speed of the said drive motor. In step c. it is stated that both the desired speed and the actual drive motor speed are used to determine the control speed and not as occurs in the prior art.

Preferable embodiments are stated in the dependent claims.

BRIEF DESCRIPTION OF THE FIGURES

The present invention will be described with reference to the appended figures, in which the same reference numbers and/or signs denote the same and/or similar and/or corresponding parts in the system.

Figure 1 shows a hydraulic diagram of a hydrostatic drive system of an operating machine according to an arrangement which is commonly known in the prior art;
Figure 2 shows a function for regulating the hydraulic pump according to a particular embodiment of the present invention;
Figure 3 shows a control speed trend in a condition in which, starting from a stopped condition, the pedal controls a sharp acceleration according to an embodiment of the present invention;
Figure 4 shows a control speed trend in a deceleration condition according to an embodiment of the present invention;
Figure 5 shows a control speed trend in a fine positioning condition with gradual acceleration and deceleration according to an embodiment of the present invention;
Figure 6 shows a control speed trend in a fine positioning condition with sudden acceleration and deceleration according to an embodiment of the present invention;
Figure 7 shows a comparison between the performance envisaged in a method according to the present invention and a method according to the prior art in a condition of low speeds and load increases, which leads to a decrease in the drive motor speed.

DETAILED DESCRIPTION

The present invention is described below with reference to particular embodiments, as illustrated in the appended drawings. However, the present invention is not limited to the particular embodiments described in the following detailed description and shown in the figures, rather the embodiments described merely exemplify various aspects of the present invention, the scope of which is defined by the claims. Further modifications and variations of the present invention will be clear to persons skilled in the art.

In this description, the term 'operating machine' means any mechanical means driven by a person (or controlled remotely) and used to carry people, animals, or things, which may circulate either on the road or off-road, such as on construction sites, quarries or mines, etc. Therefore, one example of a vehicle may be, for example, a construction machine such as a bulldozer. In general, a 'vehicle' means any means capable of displacing itself. Furthermore, in the present invention, reference to a motor speed means, for example, a number representing this speed, such as a number of revolutions per second or per minute, a number of radians per second, etc.

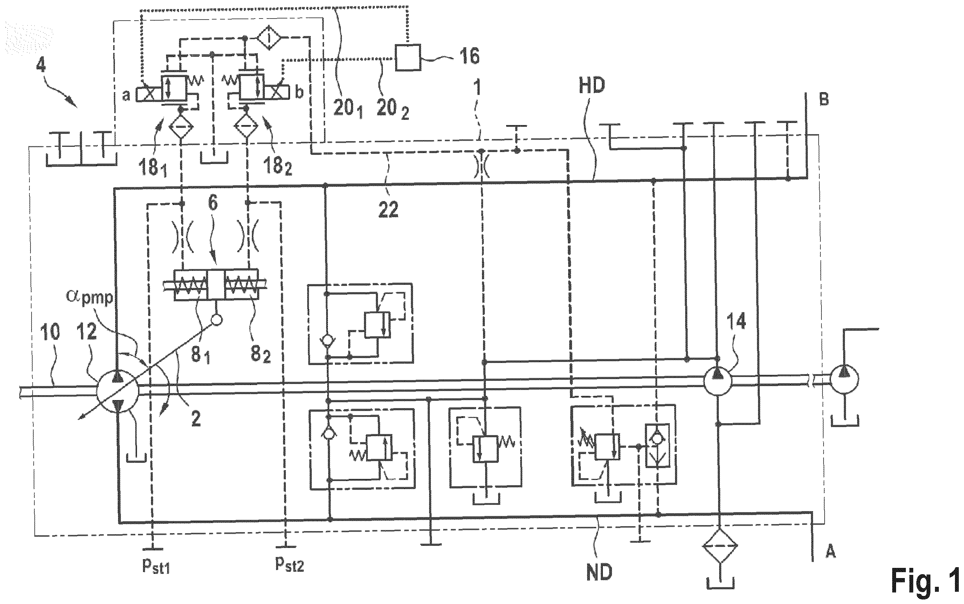

Figure 1 is a hydraulic diagram of a drive system for an operating machine with respect to which a regulation method according to an embodiment of the present invention can be used. Only the components which are essential to the invention are described. The system has a casing 1 on which two working connections A, B are formed to which a work line (not shown) from a closed circuit is connected, for example one or more hydraulic motors can be connected to the said working connections A, B, respectively. In this way, a drive system is formed for a mobile work machine (not shown), such as a bulldozer.

The axial piston pump 12 is made with a slant disk 2 (also referred to, more generally, as an oblique element) whose oscillation angle $\alpha_{pmp}$ can be set via a regulation unit 4, so as to regulate displacement of the said pump. For this purpose, a double-acting regulating cylinder 6 is used which has a first regulating pressure chamber $8_1$ and a second regulating pressure chamber $8_2$, which acts in a counter-direction to the first chamber.

A first regulating pressure $p_{st1}$ acts in the first regulating pressure chamber $8_1$ so as to determine an increase the oscillation angle $\alpha_{pmp}$ and therefore to determine an increase in the displacement of the pump 12. Conversely, a second regulating pressure $p_{st2}$ in the second chamber $8_2$ acts so as to determine a reduction in the oscillation angle $\alpha_{pmp}$ and therefore to determine a reduction in the displacement of the pump 12. In this way, a difference in regulating pressure can be produced, which results from the difference between the first and the second regulating pressure, and the said difference in regulating pressure, by definition, always acts so to determine an increase in the oscillation angle $\alpha_{pmp}$, and therefore the said displacement.

A drive shaft 10 drives the powertrain of the axial piston pump and likewise a feed pump 14, The drive shaft 10 can be driven by a diesel engine (not shown), or alternatively by an electric motor, and rotates with a variable speed. This speed acts together with the regulating pressure difference to determine an increase in the oscillation angle $\alpha_{pmp}$.

If the axial piston pump shown feeds - via the working connections A, B - numerous drive motors of the mobile work machine, in the event of forward movement, connection B must be thought of as a high pressure connection, so the line connected to the working connection B is identified as a high pressure line (HD), while the other line connected to the working connection A is identified as a low pressure line (ND). The high pressure (HD), which is also called working pressure, acts so as to determine a reduction in the oscillation angle $\alpha_{pmp}$. These relationships are defined as characteristic of the axial piston pump and are stored in an electronic control unit 16 in the form of formulas and/or as characteristic diagrams and/or characteristic lines or, more generally, functions.

The two regulating pressures are controlled via two pressure reducing valves $18_1$, $18_2$. These have an electric magnet a, b, which is connected, respectively, to the electronic control unit 16 via an electric power line $20_1$, $20_2$, respectively. The two pressure reducing valves $18_1$, $18_2$ are designed so that the respective regulating pressure $p_{st1}$, $p_{st2}$ is proportional to the respective current intensity ($I_1$, $I_2$).

The two pressure reducing valves $18_1$, $18_2$ are fed, at the intake, via a pressure supply line 22 from the feed pump 14.

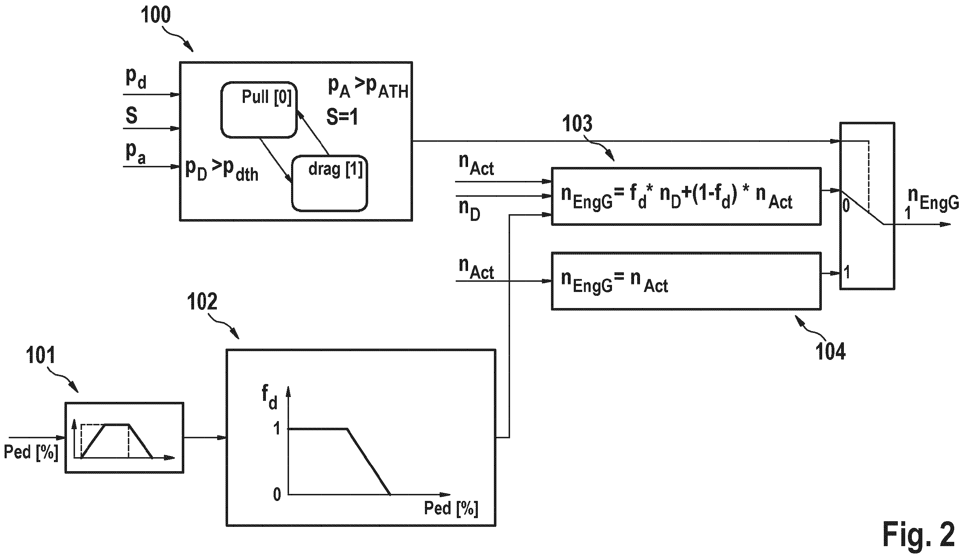

As the description continues, a method for regulating the regulating system of a hydrostatic drive system according to an embodiment of the present invention will be explained with reference to Figures 2 to 7. In particular, given that the control of a hydraulic pump, based on a control speed is found in the prior art, to avoid dwelling needlessly on the description of matters known from the prior art, the present description will focus on the determination of such control speed.

As shown in Figure 2, in a first step 100, a test is performed to establish the status of the drive system. Therefore, in this step the pressure downstream $p_A$ and upstream $p_D$ of pump 12 are inputted. Furthermore, the signal S detects whether the drive system is in a stopped condition.

Through this information it is therefore possible to identify the status of the said drive system. Indeed, if the downstream pressure $p_A$ is greater than a reference value $p_{ATH}$, a drive status of the drive system will be detected, which has - for example - a logical value of 0 (pull (0) in the figure). In the same way, the status of the pressure upstream $p_D$ will also be monitored continuously and, as soon as this value is higher than a reference value $p_{DTH}$, this will mean that the drive system is no longer in a drive status but rather in a slowdown status, which has - for example - a logical value of 0 (drag(1) in the figure). Similarly, in the event that the signal S shows a stopped condition, the processing logic will result in a pulling condition (pull(0) in the figure) being detected. Therefore, in the present invention drive status and stopped status take on the same logical value.

Current status is therefore monitored continuously in order to check for any changes which, as will become clearer over the course of the description, would lead to a change in the regulation logic.

At the same time, in a second step 101, the signal inputted by a user of the operating machine on which the said hydrostatic drive system is positioned is detected. As stated above, the signal from the user can be provided thereby via any input unit. For example, this input unit may be a joystick, an acceleration pedal, or any lever fitted inside the cab of the operating machine. In the remainder of the description, for the sake of simplicity, the said signal will simply be referred to as a 'request via pedal' or with synonyms thereof.

The said signal is preferably received in the form of a relative value. For example, the said signal value may be equal to the detected value divided by a reference value. For example, the maximum value that can be assumed by the said signal could be chosen as the reference value. In the said case, a percentage value will preferably be used, which will show the user's request with reference to a maximum request that the user could have provided. For example, a 20% pedal signal will mean that the user has requested 20% of the maximum acceleration that they could have requested.

In the said step 101, upon a request via pedal, a ramp is applied, so as to slow down any sudden change in the said request. Therefore, in the event that the user makes a sudden acceleration via the input unit, the said ramp will dampen the input signal, thereby preventing jerking.

On the basis of the said request via pedal to which the said ramp has been applied, in a subsequent step 102, a multiplication factor $f_d$ can be calculated, whose use will become clearer over the course of the present description. As shown in the figure, the said multiplication factor $f_d$ has a constant value until the request via pedal reaches a threshold value. For values above the said threshold value, the said multiplication factor $f_d$ decreases as the request increases.

As shown in the figure, there are two types of drive system control depending on whether a stopped or drive condition has been detected in step 100 or a slowdown condition has been detected. If a stopped or drive condition has been detected, the method proceeds with step 103, while if a slowdown condition has been detected, the method proceeds with step 104.

In step 103, the following are received as input: the multiplication factor $f_d$ calculated in step 102 as described above, a desired speed $n_D$ of the drive motor, preferably detected based on the request via pedal, and an actual speed of the said drive motor $n_{Act}$ (or a value dependent thereupon).

As described in the introduction, with reference to the prior art, in order to regulate hydraulic pumps, the regulation systems in use today use either a actual speed of the drive motor or a speed requested thereby as the control speed. The solution presented in this invention envisages precisely to combine the use of both values in such a way as to obtain the advantages of both and eliminate the disadvantages of the individual values, through the said combination.

Indeed, as shown in the figure, if a stopped or drive condition has been detected, the control speed is calculated using the following formula:

$$n_{EngG} = f_d \cdot n_D + (1 - f_d) \cdot n_{Act}$$

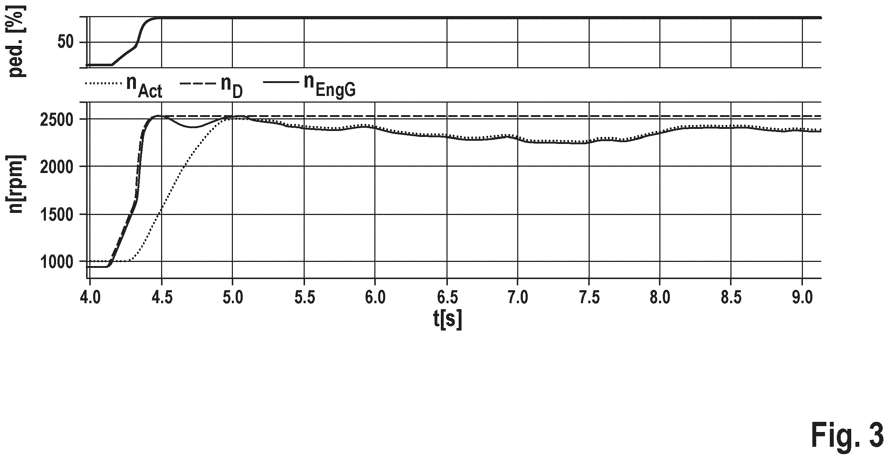

where $n_{EngG}$ corresponds to the said control speed, $f_d$ to the said multiplication factor, $n_D$ to the said desired speed, and $n_{Act}$ to the said actual speed. Therefore, in the event that the request via pedal is low, the control speed is the same as the desired speed as the multiplication factor is one. However, in the event that the request via pedal is particularly high and the multiplication factor is zero, the control speed is the same as the actual speed of the drive motor. In intermediate cases, however, the control speed takes into consideration both values, i.e. the actual speed and the desired speed. The advantages thereof will become clearer in the description referring to Figures 3 to 7, which show the value assumed by the control speed in different situations.

Clearly, the formula described above can be replaced by different formulas and therefore the present invention is not limited to the said embodiment, which has been described purely for illustrative purposes. Furthermore, the multiplication factor $f_d$ can also be calculated differently. In fact, the function used in step 102 to calculate the multiplication factor can be, for example, completely the opposite, i.e. envisaging that the said multiplication factor is zero for low request via pedal values and one for high values. In the said case, however, the function used to calculate the control speed will be complementary to that described in Figure 2.

However, if it has been detected that the drive system is in a slowdown condition, as shown in Figure 2, the control speed assumes the actual speed of the drive motor as its value so as to guarantee load-dependent performance during the slowdown stage.

Therefore, in the event that a change in the condition is detected in step 100, a different logic will be used to determine the control speed and therefore to control the hydraulic pump.

To allow a smoother change between the two logics, precautions have been developed that can be used to prevent unwanted effects, which will become clearer by referencing the diagrams shown in Figures 3 to 7.

For example, if a change between a slowdown condition and a stopped or drive condition is detected, the method can comprise the following step:

I. correcting the said detected value of the said desired speed so as to reduce the gradient of the said control speed between the said slowdown condition and the said stopped or drive condition.

Indeed, given that in the slowdown condition, the drive system is regulated based on an actual speed of the drive motor, in the event that a drive condition and a particularly high pedal signal are suddenly detected, there would be a jerk in the hydraulic pump control. Therefore, this precaution has been developed to overcome the said problem.

Moreover, if a change between a stopped condition and a stopped or drive condition is detected, the method can comprise the following steps:

I. calculating the difference between the last value of the said control speed during the said stopped or drive condition and the desired speed during the said slowdown condition,
II. correcting the said detected value of the said control speed during the said slowdown condition based on the said difference that was calculated.

The said correction based on the said calculated difference is achieved by applying a correction factor to the said control speed, the said correction factor being proportional to the said difference and inversely proportional to the time passed since the said change from the said stopped or drive condition to the said slowdown condition, with the result that the said correction will be less noticeable and guarantee a smooth transition between the two conditions.

With reference now to Figures 3 to 7, different conditions will be described and the performance of the solution presented in Figure 2 of the present invention will be shown in each of them.

Figure 3 shows the performance of the drive system in a condition in which, from a stopped condition, the speed requested via the pedal accelerates sharply, from 0 to 100 in a short time, and subsequently remains constant at 100. As shown, in the initial transient state, due to the ramp envisaged in step 101, the control speed shown with the solid line follows the same trend as the desired speed. However, if the said ramp were not present it would be clear, based on the logic shown in

Figure 2, that the control speed would follow the desired speed trend directly.

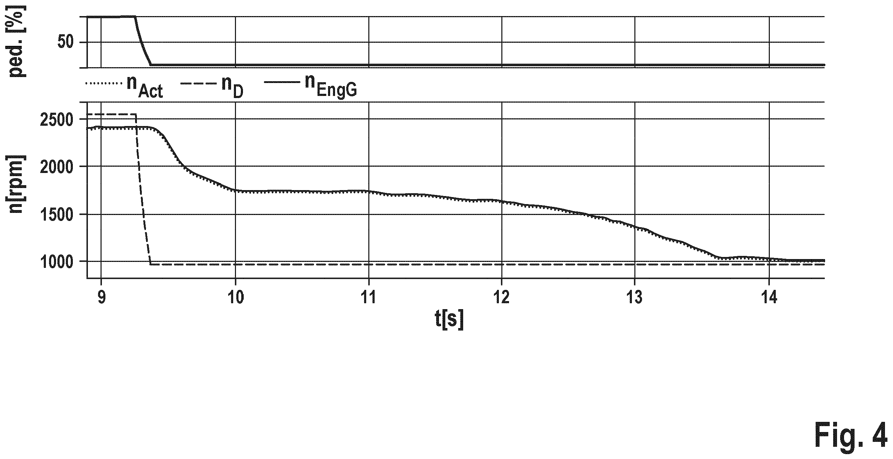

Figure 4, meanwhile, shows a deceleration condition in which, as can be seen from the logic shown in Figure 2, the hydraulic pump is regulated based on the actual speed of the drive motor, therefore with a smooth and load-dependent performance.

Consequently, in the said deceleration condition, after the pedal has been brought to 0, the control speed follows the actual speed trend completely.

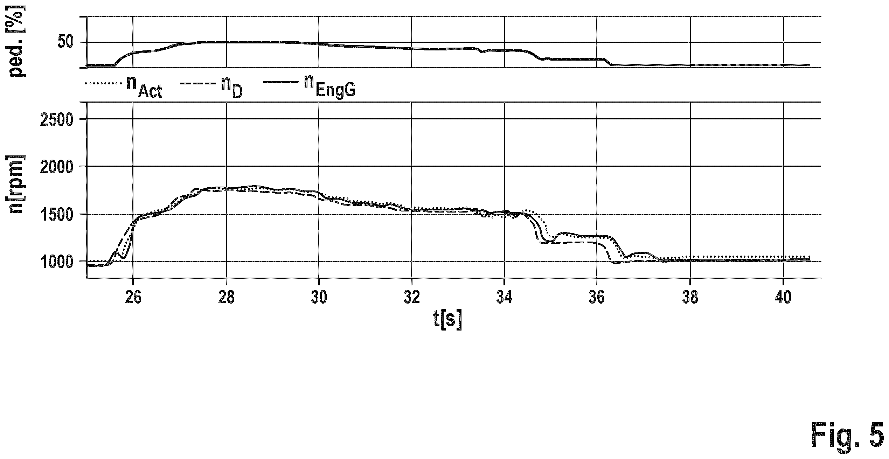

Figure 5, meanwhile, shows a fine positioning condition in which the acceleration pedal, as shown in the upper part of the figure, is pressed gradually until it reaches 50%. During fine positioning, the pump is controlled according to the desired speed, given that the multiplication factor assumes a value of either 1 or not significantly different from 1. The said fine control is direct, without any delays or instability in the motor speed, therefore without causing sudden stops that would instead occur if the EDA system were used and there were suddenly an increase in load (due to external conditions).

However, in the event that the pedal is released slowly from the said position (for example, lasting from 35 seconds upwards), and therefore a slowdown condition is established, the control envisaged in step 104 would then begin, i.e. pump control based on the actual speed of the drive motor. All the foregoing happens continuously, limiting the transition gradient, thanks to the precaution described above regarding this particular case.

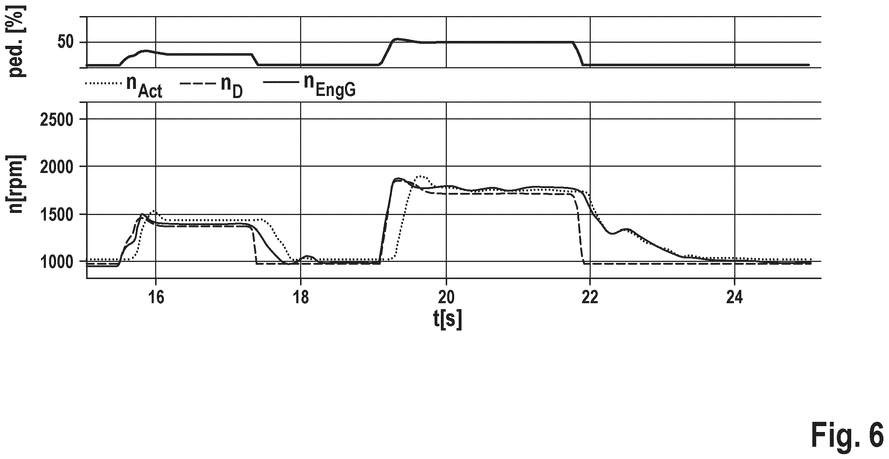

Figure 6, meanwhile, shows a fine positioning condition in which the acceleration pedal, as shown in the upper part of the figure, is pressed and released sharply (compared to the example in Figure 5). When fine positioning is carried out by jogging the pedal, it is noticeable that there is a direct response. The figure shows two different examples which correspond to an acceleration and a release of the pedal of around 0-30% (between 15 and 18s) and an acceleration and a release of the pedal of around 0-50% (between 19 and 22s). Given that the acceleration is particularly slight when the pedal is initially released, in step 100 a deceleration condition is not yet detected (the upstream pressure is still lower than the reference value) and therefore, even during the release phase, the hydraulic pump is regulated according to logic 103, i.e. combining the actual speed and the desired speed. Therefore, the control speed is an intermediate value between the actual speed and the desired speed. In the second case however, given that the accelerations are more substantial, a deceleration condition is detected and the control speed assumes the same value as the desired speed.

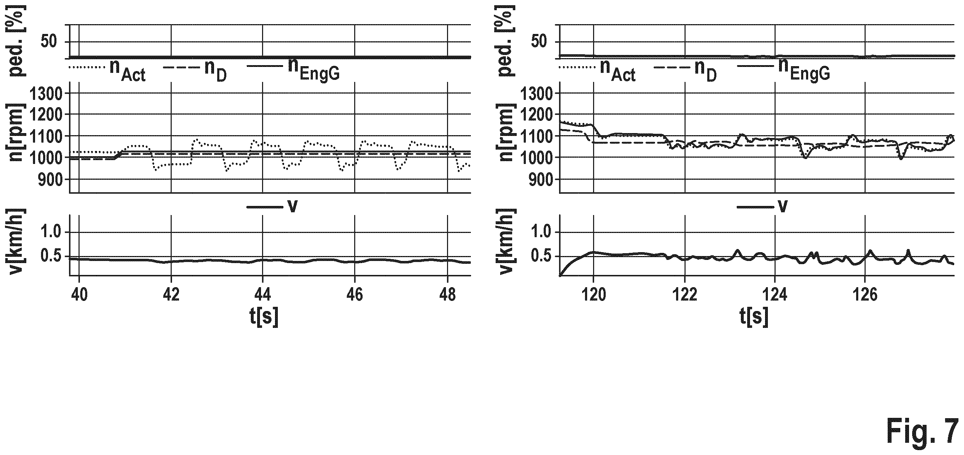

Figure 7, meanwhile, shows an example of slow driving (the accelerator is pressed just slightly) with the simultaneous use of tools (such as an excavator shovel). In this case, significant improvements in driving stability can be demonstrated. With the pedal applied constantly, a load is added to the motor, such as when lifting a weight. On the left-hand side, a control based purely on the desired speed is shown (i.e. what happens thanks to the control shown in Figure 2, i.e. a low pedal request and therefore a multiplication factor of 1). In this case, variations in the drive motor speed directly affect the pump control flow, guaranteeing the operating machine on which the drive system is positioned a constant speed.

Consequently, the speed of the operating machine is completely stable. The right-hand side, however, shows the variation in the motor speed comparable to that on the left, but the pump is controlled by the drive motor speed (a case of EDA control). As a result, the pump control flow and vehicle speed show greater instability.

The present invention further describes a computational unit adapted to perform a method according to any of the previous claims.

Furthermore, the present description comprises a computer program that causes a computational unit to perform a method such as that described in the present invention.

Also described is a readable storage medium that comprises the computer program described above stored thereon.

Although the present invention has been described with reference to the embodiments described above, it would be clear to a person skilled in the art that various modifications, variations and improvements can be made to the present invention based on the teaching described above and within the scope of the appended claims, without departing from the subject matter and falling outside the scope of protection of the invention. Lastly, aspects that are deemed known to any person skilled in the art have not been described, to avoid uselessly overshadowing the invention described.

Consequently, the invention is not limited to the embodiments described above but rather is only limited by the scope of protection of the appended claims.

**Claims**

1. A method for adjusting a hydrostatic traction system, wherein said hydrostatic traction system includes a hydraulic pump (12), the rotation of which is provided by a drive motor, and at least one hydraulic motor connected in a closed circuit to said hydraulic pump (12), wherein said hydraulic pump (12) has an adjustment unit (4) for adjusting the displacement of said hydraulic pump, wherein said displacement is adjustable by adjusting an angle of inclination ($\alpha_{pmp}$) of an inclined element (2), wherein said hydrostatic drive system is configured to adjust said inclined element (2) on the basis of a command speed, wherein said drive motor is adjusted on the basis of a signal from an input unit of said hydrostatic drive system, said input unit being configured so as to be able to receive a command from a user of said drive system, said method being configured by comprising the following steps:

   a. Detect a signal from said user by means of said input unit;
   b. Detect a desired speed of said drive motor based on said signal detected in step a., and detect a current speed of said drive motor;
   c. Calculate a value of said drive speed to be used for adjusting the hydraulic pump (12) on the basis of said signal from said user detected in said step a., said desired speed and said current speed;
   d. Adjust said hydraulic pump on the basis of said command speed calculated in said step c.

2. Method according to claim 1, wherein on the basis of said signal from said user detected in said step a. a multiplicative factor ($f_d$) is calculated, wherein said step c. said multiplicative factor is directly or indirectly applied to said desired speed and said current speed for calculating said command speed.

3. Method according to claim 2, wherein in said step c. said command speed is calculated by means of the following formula:

$$n_{EngG} \ = \ f_d \ \cdot \ n_D \ + \ (1 \ - \ f_d) \ \cdot \ n_{Act}$$

wherein $n_{EngG}$ corresponds to said command speed, $f_d$ to said multiplicative factor, no to said desired speed, and $n_{Act}$ to said current speed.

4. Method according to any one of claims 1 to 3, wherein said multiplicative factor ($f_d$) has a constant value until signal from said user detected in said step a. reaches a threshold value, wherein for higher values of said threshold value said multiplicative factor ($f_d$) decreases as said signal increases.

5. Method according to any of claims 1 to 4, wherein said step c. for calculating said value of said command speed is carried out only for the case that said hydrostatic drive system has been detected to be in a stop or in a pull condition.

6. Method according to claim 5, wherein if it has been found that said hydrostatic drive system is in drag condition said value of said command speed equals said current speed of said drive motor.

7. Method according to claim 6, wherein in case a change is detected between a drag condition and a stop or pull condition the following step is performed:
correcting said detected value of said desired speed so as to reduce the gradient of said command speed between said drag condition and said stop or pull condition.

8. Method according to any one of claims 6 or 7, wherein in the case of detecting a change between a stop or pull condition to a drag condition the following steps are performed:

   calculate the difference between the last value of said command speed during said stop or pull condition and the desired speed during said drag condition;
   correcting said detected value of said command speed at said drag condition on the basis of said calculated difference.

9. Method according to claim 8, wherein said correction based on said calculated difference is performed by applying to said command speed a correction factor proportional to said difference and inversely proportional to the time elapsed from said change between said stop or pull condition to said drag condition.

10. Method according to any one of claims 1 to 9, wherein in said step a. a ramp is applied to said signal from said user by means of said input unit so as to slow a sudden change of said signal.

11. Method according to any one of claims 1 to 10, wherein in said step a. said signal is detected in the form of a relative value based on the signal from the user and a reference value, wherein said reference value is preferably equal to the maximum value that said signal can take.

12. Computational unit containing means for performing a method according to any of the preceding claims.

13. Operating machine comprising a hydrostatic drive system, wherein said hydrostatic drive system comprises said hydraulic pump (12), the rotation of which is provided by a drive motor, and at least one hydraulic motor connected in a closed circuit to said hydraulic pump (12), wherein said hydraulic pump (12) has an adjusting unit (4) for adjusting the displacement of said hydraulic pump, wherein said displacement is adjustable by adjusting an angle of inclination ($\alpha$pmp) of an inclined element (2), wherein said adjusting unit (4) has an adjusting cylinder (6) with a first adjusting pressure chamber (81) in which, by means of a first valve (181) a first regulating pressure can be set which depends on a first current intensity ($I_1$) of the first valve (181) and which is configured to affect the inclination ($\alpha$pmp) of said inclined element (2), wherein said regulating unit (4) is configured such that an increase in the delivery pressure of the hydraulic pump (2) tends to cause a reduction in the displacement of the hydraulic pump (12), wherein said operating machine comprises a calculation unit according to claim 12.

14. Computer program comprising instructions which, when the program is executed by a computer, cause the computer to perform the steps of the method of any one of claims 1 to 11.

15. Computer-readable storage medium comprising instructions which, when executed by a computer, cause the computer to execute the method steps of any one of claims 1 to 11.

Fig. 1

EP 4 417 841 A1

Fig. 2

EP 4 417 841 A1

Fig. 3

EP 4 417 841 A1

Fig. 4

Fig. 5

Fig. 6

EP 4 417 841 A1

Fig. 7

EP 4 417 841 A1

# EUROPEAN SEARCH REPORT

Application Number

EP 24 15 5943

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/010025 A1 (EVANS MARK DAVID [US]) 16 January 2003 (2003-01-16) | 1-6, 10-15 | INV. F16H61/431 F16H61/465 |
| A | * paragraphs [0023] - [0029], [0039]; figures * | 7-9 | |
| X | US 2017/241448 A1 (KONDO HIROKI [JP] ET AL) 24 August 2017 (2017-08-24) | 1-6, 10-15 | |
| A | * paragraph [0062]; claims 2,3; figures * | 7-9 | |

**TECHNICAL FIELDS SEARCHED (IPC)**

F16H
E02F

The present search report has been drawn up for all claims

| Place of search | Date of completion of the search | Examiner |
|---|---|---|
| Munich | 23 May 2024 | Meritano, Luciano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................

& : member of the same patent family, corresponding
document

EPO FORM 1503 03.82 (P04C01)

ANNEX TO THE EUROPEAN SEARCH REPORT
ON EUROPEAN PATENT APPLICATION NO.

EP 4 417 841 A1

EP 24 15 5943

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2024

| Patent document cited in search report | Publication date | Patent family member(s) | Publication date |
|---|---|---|---|
| US 2003010025 A1 | 16-01-2003 | CA 2392784 A1 | 13-01-2003 |
| | | DE 60214935 T2 | 08-03-2007 |
| | | EP 1275887 A2 | 15-01-2003 |
| | | US 2003010025 A1 | 16-01-2003 |
| US 2017241448 A1 | 24-08-2017 | EP 3208495 A1 | 23-08-2017 |
| | | US 2017241448 A1 | 24-08-2017 |

For more details about this annex : see Official Journal of the European Patent Office, No. 12/82